# EUROPÄISCHE PATENTSCHRIFT

(11) **EP 1 346 173 B1**
(45) Veröffentlichungstag und Bekanntmachung des Hinweises auf die Patenterteilung: **12.07.2006**
(21) Anmeldenummer: 01976246.7
(22) Anmeldetag: 21.09.2001
(51) Int. Cl.: F16L 11/15

(54) **KANALROHR**
PIPING
CANALISATION

(30) Priorität: 16.12.2000 DE 20021348 U
(43) Veröffentlichungstag der Anmeldung: 24.09.2003
(73) Patentinhaber: Pluggit International N.V., Curaçao (AN)
(72) Erfinder: BERNHARDSSON, Göran, B-1050 Brüssel (BE)
(74) Vertreter: KEIL & SCHAAFHAUSEN Patentanwälte
(86) Internationale Anmeldenummer: PCT/EP2001/010922
(87) Internationale Veröffentlichungsnummer: WO 2002/048595

(56) Entgegenhaltungen:
- EP-A- 1 099 894
- EP-A- 1 122 481
- DE-A- 2 944 984
- DE-A- 19 504 616
- DE-A- 19 930 151
- US-A- 3 794 080

## Beschreibung

Die Erfindung bezieht sich auf ein Kanalrohr zum Transportieren von Luft und dgl. Medien, insbesondere für die Anwendung in Heizungs-, Lüftungs- und Klimatisierungsanlagen, bzw. als Elektroinstallationsrohr.

Der Einsatz herkömmlicher Kanalrohre dieser Art scheitert häufig an dem Platzbedarf und/oder sie sind bei nicht-gerader Verlegung schwer ohne Druckverluste für das in ihnen strömende Medium zu montieren, wenig widerstandsfähig oder von hohem Gewicht und unter Umständen schwierig zu reinigen.

Aus der DE 29 44 984 A1 ist eine derartige Leitung bekannt, die eine elliptischovale langgestreckte Form aufweist. Der größte Außendurchmesser beträgt dabei etwa 168 mm und der kleinste Außendurchmesser beträgt etwa 82 mm. Die Wandung der Leitung ist wellenförmig mit einer Wellenhöhe von etwa 5,5 mm und einem Scheitelabstand zweier Wellen von etwa 5 mm. Durch die ebenfalls wellenförmige Innenkontur der Leitung wird der Strömungswiderstand deutlich erhöht. Zudem ist diese Gestaltung der Wandung stark anfällig für Schmutzablagerungen und nur schwer zu reinigen. Weiter wird auch die Widerstandsfähigkeit als verbesserungsfähig empfunden.

Aufgabe der vorliegenden Erfindung ist es, ein Kanalrohr vorzuschlagen, welches diese Nachteile nicht aufweist, d.h. insbesondere verhältnismäßig flach ausgebildet sein kann, dennoch flexibel auch in Krümmungen ohne störenden Druckverlust des in ihm strömenden Mediums verlegt werden kann und bei geringem Gewicht hohe Robustheit aufweist.

Diese Aufgabe wird bei einem Kanalrohr der eingangs genannten Art, welches eine Innenhöhe zwischen etwa 30 und 80 mm und eine Innenbreite zwischen etwa 70 und 150 mm aufweist, wobei vorzugsweise die Innenhöhe nicht größer als etwa die Hälfte der Innenbreite ist, und wobei die Wandung im Wesentlichen sinuswellenförmig mit einer Wellenhöhe zwischen etwa 4 und 10 mm und einer Wellenlänge zwischen etwa 5 und 20 mm ausgebildet ist, erfindungsgemäß im Wesentlichen dadurch gelöst, dass die nach innen weisenden Wellen eine glatte Innenfläche im Bereich eines nach außen weisenden als Verstärkung des Wandmaterials ausgebildeten Zwischenbuckels haben. Hierdurch ist bei ausreichender Stabilität eine gute Reinigungsmöglichkeit gewährleistet.

Dabei liegt die Wandstärke vorzugsweise zwischen etwa 0,2 und 2 mm, so dass das Kanalrohr gefahrlos transportierbar, in den Boden einlassbar und dort sogar begehbar ist.

Die nach außen weisenden Wellen der Wandung sind bei einer besonderen Ausgestaltung der Erfindung im Wesentlichen von halbrunder Form, um die notwendige Flexibilität zu gewährleisten.

Mit der Erfindung wird ferner vorgeschlagen, dass das Wandmaterial ein vorzugsweise lebensmittelverpackungsechter Kunststoff, insbesondere ein Polypropylen-Kopolymer oder Polyethylen mit einer Dichte zwischen etwa 0,8 bis 1,3 g/m³ ist. Hierdurch wird das erforderliche geringe Gewicht gewährleistet und, wo erforderlich, auch eine gesundheitliche Gefährdung des Menschen vermieden.

Um thermischen Beanspruchungen bei Formstabilität hinreichend standhalten zu können, sollte das Wandmaterial einen Schmelzindex zwischen etwa 145 und 190°C aufweisen.

Ein weiterer Vorteil wird dann erzielt, wenn das Wandmaterial ein vorzugsweise lebensmittelverpackungsechtes Flammschutzmittel enthält. Je nach prozentualem Anteil des Flammschutzmittels können auf diese Weise die die Anforderungen an bestimmte Brandschutzvorschriften oder -normen erfüllt werden.

Der Querschnitt des erfundenen Kanalrohrs kann flach-eckig aber auch flach-oval sein. Im letzteren Fall sollten die geraden Wandbereiche nicht größer sein als der Durchmesser der halbzylinderförmige Wandbereiche.

Weitere Vorteile und Anwendungsmöglichkeiten der vorliegenden Erfindung ergeben sich aus der nachfolgenden Beschreibung von Ausführungsbeispielen anhand der Zeichnung.

Es zeigen:
- Fig. 1: ein die Erfindung aufweisendes Kanalrohr in Seitenansicht,
- Fig. 2: das Kanalrohr gemäß Fig. 1 in stirnseitiger Ansicht,
- Fig. 3: das Kanalrohr von Fig. 1 in Draufsicht,
- Fig. 4: eine stirnseitige Ansicht des Kanalrohrs von Fig. 3, und
- Fig. 5: die Einzelheit X aus Fig. 3 im Schnitt gesehen.

Das in den Figuren dargestellte Kanalrohr 1 dient z.B. dem Transportieren von Luft und dgl. Medien, insbesondere für die Anwendung in Heizungs-, Lüftungs- und Klimatisierungsanlagen, oder als Elektroinstallationsrohr. Die Innenhöhe Hᵢ des Kanalrohres 1 liegt zwischen etwa 30 und 80 mm, seine Innenbreite Bᵢ zwischen etwa 70 bis 150 mm. Für eine bevorzugte flache Ausgestaltung ist dann gesorgt, wenn die Innenhöhe Hᵢ nicht größer als etwa die Hälfte der Innenbreite Bᵢ ist.

Das Kanalrohr 1 hat eine im Wesentlichen sinuswellenförmig gestaltete Wandung W mit einer Wellen höhe H_{w} zwischen etwa 4 und 10 mm und einer Wellenlänge L_{w} zwischen etwa 5 und 20 mm. Die Wandstärke S_{w} liegt zwischen etwa 0,2 und 2 mm, woraus sich die Außenbreite Bₐ und die Außenhöhe Hₐ ergibt.

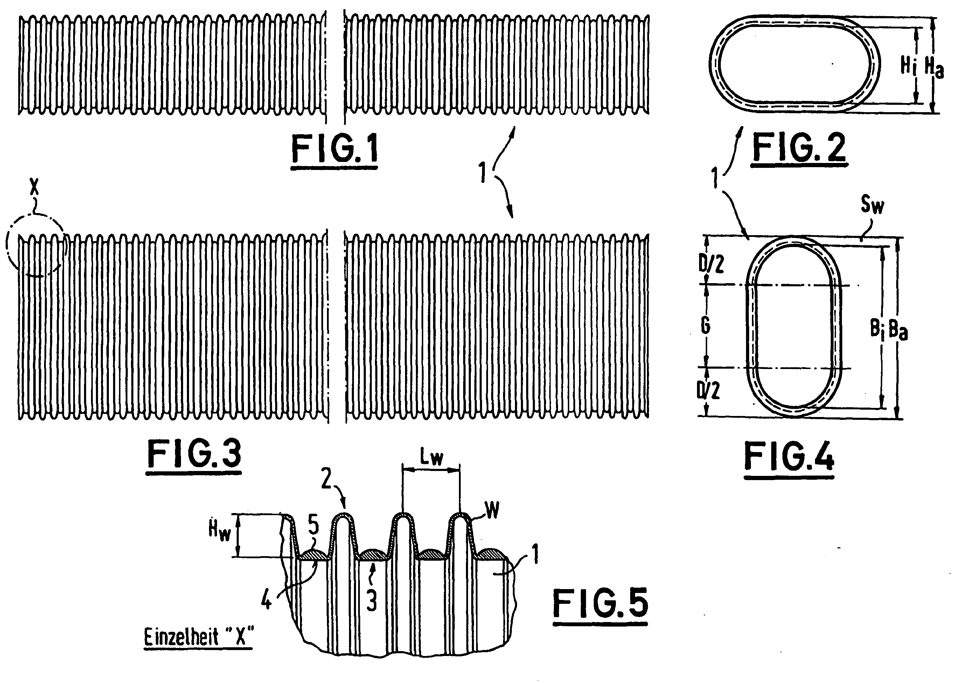

Wie sich aus der zeichnerischen Darstellung insbesondere von Fig. 3 ergibt, haben die nach außen weisenden Wellen 2 der Wandung W im Wesentlichen halbrunde Form. Die nach innen weisenden Wellen 3 sind dagegen mit einer glatten Innenfläche 4 im Bereich eines nach außen weisenden Zwischenbuckels 5 ausgestattet. Die Zwischenbuckel 5 sind durch eine bereichsweise Vergrößerung der Wandstärke S_{w} auf bis zum 3- oder 4-fachem der sonstigen Wandstärke S_{w} gebildet. Die äußere Oberfläche der Buckel 5 ist konvex gekrümmt.

Das Wandmaterial des Kanalrohres 1 kann ein vorzugsweise lebensmittelverpackungsechter Kunststoff, insbesondere ein Polypropylen-Kopolymer oder Polyethylen mit einer Dichte zwischen 0,8 bis 1,3 g/m³ sein, wobei aus Gründen der Temperaturwiderstandsfähigkeit ein Schmelzindex zwischen etwa 145 und 190°C eingehalten werden sollte. Das Wandmaterial kann ferner ein ebenfalls vorzugsweise lebensmittelver-packungsgeeignetes Flammschutzmittel enthalten, das in seiner Menge an verschiedene Brandschutzforderungen angepasst werden kann.

Wie sich insbesondere aus den Fig. 2 und 4 ergibt, hat das dargestellte Kanalrohr 1 bei dieser Ausführungsform einen flach-ovalen Querschnitt, wobei der gerade Wandungsbereich G nicht nennenswert kleiner sein sollte als der Durchmesser der halbzylinderförmigen Wandbereiche.

### Bezugszeichenliste:

- 1: Kanalrohr
- 2: nach außen weisende Welle
- 3: nach innen weisende Welle
- 4: Innenfläche
- 5: Zwischenbuckel

- Bᵢ: Innenbreite
- Bₐ: Außenbreite
- D: Durchmesser
- G: gerader Wandabschnitt
- Hₐ: Außenhöhe
- Hᵢ: Innenhöhe
- H_{w}: Wellenhöhe
- S_{w}: Wandstärke
- W: Wandung

## Patentansprüche

1. Kanalrohr zum Transportieren von Luft und dgl. Medien, insbesondere für die Anwendung in Heizungs-, Lüftungs- und Klimatisierungsanlagen, bzw. als Elektroinstallationsrohr, mit einer Innenhöhe (Hᵢ) zwischen etwa 30 und 80 mm und einer Innenbreite (Bᵢ) zwischen etwa 70 bis 150 mm, wobei vorzugsweise die Innenhöhe (Hᵢ) nicht größer als etwa die Hälfte der Innenbreite (Bᵢ) ist, und mit einer im Wesentlichen sinuswellenförmigen Wandung (W) einer Wellenhöhe (H_{w}) zwischen etwa 4 und 10 mm und einer Wellenlänge (L_{w}) zwischen etwa 5 und 20 mm, **dadurch gekennzeichnet, dass** die nach innen weisenden Wellen (3) eine glatte Innenfläche (4) im Bereich eines nach außen weisenden von einer Verstärkung des Wandmaterials ausgebildeten Zwischenbuckels (5) haben.

2. Kanalrohr nach Anspruch 1, mit einer Wandstärke (S_{w}) zwischen etwa 0,2 und 2 mm.

3. Kanalrohr nach Anspruch 1 oder 2, wobei die nach außen weisenden Wellen (2) der Wandung (W) im Wesentlichen Halbrundform aufweisen.

4. Kanalrohr nach einem der vorhergehenden Ansprüche, wobei das Wandmaterial ein vorzugsweise lebensmittelverpackungsgeeigneter Kunststoff, insbesondere ein Polypropylen-Kopolymer oder Polyethylen mit einer Dichte zwischen etwa 0,8 bis 1,3 g/m³ ist.

5. Kanalrohr nach einem der vorhergehenden Ansprüche, wobei das Wandmaterial einen Schmelzindex zwischen 145 und 190°C aufweist.

6. Kanalrohr nach einem der vorhergehenden Ansprüche, wobei das Wandmaterial ein vorzugsweise lebensmittelverpackungsgeeignetes Flammschutzmittel enthält.

7. Kanalrohr nach einem der vorhergehenden Ansprüche, mit einem flacheckigen oder -ovalen Querschnitt.

8. Kanalrohr nach einem der vorhergehenden Ansprüche, wobei, wenn der Querschnitt flach-oval ist, die geraden Wandungsbereiche (G) ihrer Länge nach etwa dem Durchmesser (D) der halbzylinderförmigen Wandbereiche entsprechen.

## Claims

1. A channel pipe for supplying air and the like fluids, in particular for use in heating, ventilating and air conditioning systems or for use as an electric tube, having an inner height (Hᵢ) of between about 30 and 80 mm and an inner width (Bᵢ) of between about 70 and 150 mm, with the inner height (Hᵢ) not exceeding approximately half the inner width (Bᵢ), and comprising a wall (W) of substantially sinusoidal wave shape of a wave height (H_{w}) of between about 4 and 10 mm and a wave length (L_{w}) of between about 5 and 20 mm, **characterized in that** the waves (3) extending toward the inside comprise a smooth internal face (4) in the area of an intermediate hump (5) extending to the outside and being formed by a reinforcement of the wall material.

2. A channel pipe according to claim 1 having a wall strength (S_{w}) of between about 0.2 and 2 mm.

3. A channel pipe according to claims 1 or 2, wherein the waves (2) of the wall (W) extending toward the outside are of a substantially half-round shape.

4. A channel pipe according to any one of the preceding claims, wherein the wall material, preferably, is a plastic material suitable for food packing, more preferably, a polypropylene copolymer or polyethylene of a density of between about 0.8 and 1.3 g/m³.

5. A channel pipe according to any one of the preceding claims, wherein the wall material has a melt index of between 145 and 190°.

6. A channel pipe according to any one of the preceding claims wherein the wall material contains a fire-resistant agent which, preferably, is suitable for food packing.

7. A channel pipe according to any one of the preceding claims which is of a flat-angular or flat-oval cross-section.

8. A channel pipe according to any one of the preceding claims wherein the length of the straight wall areas (G) in case of a flat-oval cross-section approximately corresponds to the diameter (D) of the wall areas of semi-cylindrical shape.

## Revendications

1. Conduit à transport de l'air et des fluides similaires, particulièrement utilisé dans les systèmes de chauffage, ventilation et climatisation respectivement comme tuyau électrique, comportant une hauteur libre (interne) (Hᵢ) entre d'environ 30 et 80 mm et une ouverture (largeur intérieure) (Bᵢ) entre d'environ 70 et 150 mm, la hauteur libre (Hᵢ) préférablement ne dépassant pas la moitié de l'ouverture (Bᵢ), et comportant une parois (W) essentiellement sous forme d'une onde sinusoïdale d'une hauteur d'onde (H_{w}) entre d'environ 4 et 10 mm et d' une longueur d'onde (L_{w}) entre d'environ 5 et 20 mm, **caractérisé en ce que** les ondes (3) s'étendant à l'intérieure sont prévues d'un surface intérieure (4) lisse dans la région d'une bosse intermédiaire (5) s'étendant à l'extérieure et étant formée par un renforcement de la matière de parois.

2. Conduit selon la revendication 1 ayant une épaisseur de parois (S_{w}) entre d'environ 0,2 et 2 mm.

3. Conduit selon les revendications 1 ou 2, dans lequel les ondes (2) de la parois (W) s'étendant vers l'extérieure sont essentiellement en forme demi-ronde.

4. Conduit selon l'une des revendications précédentes, dans lequel la matière de parois est préférablement une matière synthétique propre à l'emballage de comestibles, en particulier un polypropylène copolymère ou polyéthylène ayant une densité entre d'environ 0,8 et 1,3 g/m³.

5. Conduit selon l'une des revendications précédentes dans lequel la matière des parois comporte un index de fusion entre 145 et 190°C.

6. Conduit selon l'une des revendications précédentes dans lequel la matière de parois contient un agent pare-flamme préférablement propre à l'emballage de comestibles.

7. Conduit selon l'une des revendications précédentes d'une section en forme platte-angulaire ou platte-ovale.

8. Conduit selon l'une des revendications précédentes dans lequel en cas de section platte-ovale la longueur des régions de parois droites (G) à peu près corresponde à la section (D) des régions des parois demi-cylindre.
